# EUROPEAN PATENT APPLICATION

(11) **EP 1 274 196 A2**
(43) Date of publication of application: **08.01.2003**
(21) Application number: 02014950.6
(22) Date of filing: 08.07.2002
(51) Int. Cl.: H04L 12/18, H04L 12/413

(54) **Method and apparatus for explicit multicasting over Ethernet**

(30) Priority: 06.07.2001 KR 2001040367
(71) Applicant: KTFreetel Co., Ltd., 135-280 Seoul (KR)
(72) Inventor: Lee, Ji-Woong, 137-070 Seoul (KR)
(74) Representative: Rickard, David John

(57) **Abstract**

The present invention relates to a method and an apparatus for explicit multicast service in Ethernet for executing an explicit multicast service designed for point-to-point link in Ethernet effectively. According to the present invention, there is provided a method and an apparatus for providing explicit multicast service by a router connected to the Ethernet and apparatus thereof. The method and the apparatus perform as follows: receives the explicit multicast data packet to be transmitted to the Ethernet, detects a path of the explicit multicast data packet by use of the explicit multicast data packet, determines a next node on the path of the explicit multicast data packet, sets an Ethernet address of the next node as an Ethernet address of destination of the explicit multicast data packet, and transmits the explicit multicast data packet to the next node.

## Description

The present invention relates to a method and an apparatus for explicit multicast service in Ethernet, more particularly to the method and apparatus for explicit multicast service in Ethernet for executing an explicit multicast service designed for point-to-point link in Ethernet effectively.

### Background Art

There is an increasing desire to be able to access information using a computer networking service such as an Internet. For example, since specific types of information such as news, economic information, and sports scores are suited for use by a large number of consumers, information of this type can be transmitted to a large number of consumers via computer networks after being packaged by a manufacturer.

The manufacturer reproduces the information based on the number of consumers and then transmits the information reproduced to each consumer.

This can be referred to as unicasting such as the method described above. Unicasting requires a large number of processing steps for reproducing the information based on the number of consumers and then transmitting the information reproduced to consumers. Therefore, unicasting requires extensive network bandwidth.

The present invention relates to a multicast service to overcome the above-described disadvantages. In the multicast service a manufacturer transmits a message, and the message is reproduced based on the number of consumers to a suitable level and then the message is reproduced to each consumer.

In multicasting, the reproduction of the message is performed by a router and furthermore only when the reproduction is necessary.

A multicast technique in Internet can be divided into two classes as follows: the former is a Host group model multicast based on an RFC 1112 of IETF, whereas the latter is an explicit multicast based on a draft-oomx-xcast-basic-spec-xx.txt of IETF.

Firstly, the host group model multicast will be described with an accompanying drawing.

The host group model multicast, after being introduced in the early 1980's, is well-known technology still utilized commercially and experimentally.

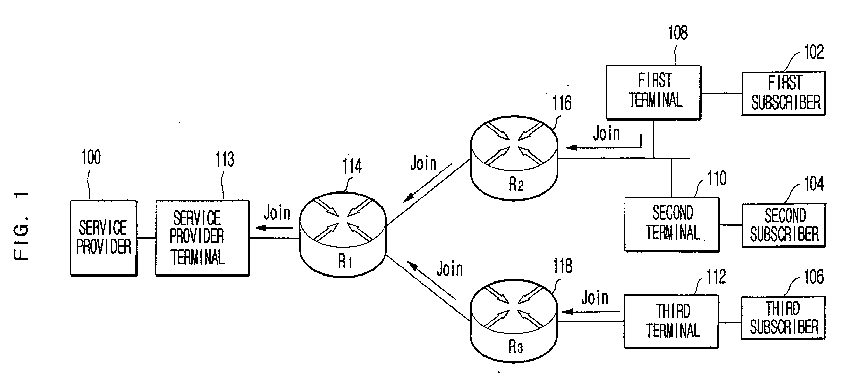

Fig. 1 is a schematic view for illustrating a host group model multicast.

Referring to Fig.1, a service provider 100 gives information for service to a first subscriber to a third subscriber 102,104,106 via on line or off line.

The first subscriber 102 and the third subscriber 106 transmit a signal for requesting a service of a service provider to a service provider terminal 113 by use of the first terminal 108 and the third terminal 112.

Namely, the first subscriber 102 and the third subscriber 106 transmit the first join signal and the second join signal for requesting the service of the service provider to the second router 116 and the third router 118.

The second router 116 transmits the third join signal according to the received first join signal to the first router 114, and the third router 118 transmits the fourth join signal according to receipt of the second join signal to the first router 114. The first router 114 memorizes paths of the third join signal and the fourth join signal.

The first router 114 transmits the fifth join signal according to the third join signal and the fourth join signal that were received from the second router 116 and the third router 118 to the service provider terminal 113, and by the fifth join signal, the service provider terminal 113 assumes that the subscriber who requests the service is located under the first router 114. However, the first subscriber 102 and the third subscriber 106 who request the service are not managed as a group.

Then, the service provider 100 transmits a first data packet for offering a service to a certain subscriber to the first router 114.

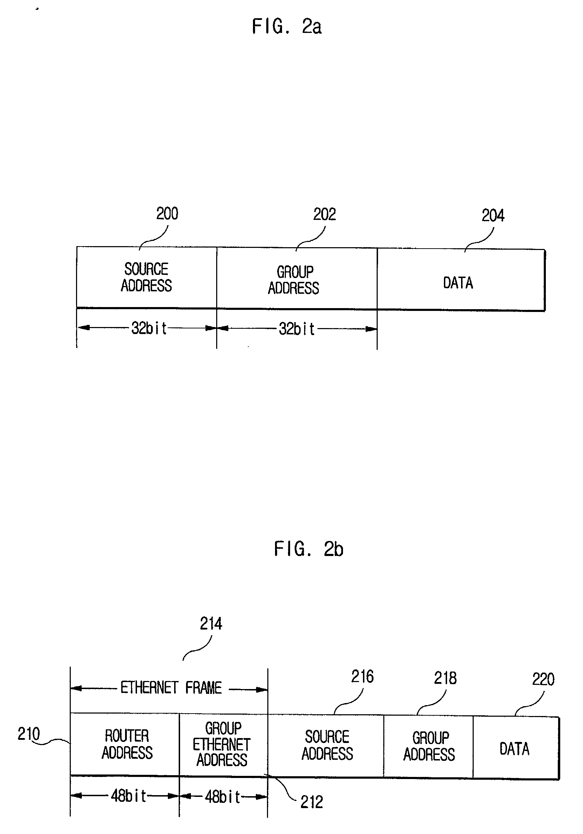

As shown in Fig. 2a, the first data packet comprises a source address field 200 of 32bits, a group address field 202 of 32bits, and a service data field 204.

Here, the source address is an INTERNET address of the service provider terminal, and the group address is a predetermined multicast group address for multicasting to the group including the first subscriber 102 and the third subscriber 106 who request the service.

The multicast group address is one selected from the multicast addresses '244.0.0.0' to '239.255.255.255' allotted by a certain address endowment organization.

As shown in Fig. 2a the first router 114 reproduces the first data packet received from the service provider terminal 110 for providing a service to the first subscriber to the third subscriber 102,104,106 and transmits the first data packet to the second router 116 and the third router 118 which are paths of the third join signal and the fourth join signal.

In order to provide the service to the first to the third subscriber 102, 104, 106, the first router 114 reproduces the first data packet as shown in FIG 2a received from the service provider terminal 113 and then transmits the first data packet to the second router 116 and the third router 118 of the link where the third join signal and the fourth join signal are transmitted from.

Here, the first router 114 has a multicast function to reproduce the first data packet based on the number of paths and to transmit. Since the data packets that are reproduced by the first router 114 have the same contents of the first data packet, the reproduced data packets are called "the first data packet".

To transmit the first data packets that are received from the first router 114 to the first terminal 108, the second router 116 produces the second data packets that have an Ethernet frame in packet header of the first data packet.

The second router 116 is connected with the first terminal 108 and the second terminal 110 by a same link to form an Ethernet.

As shown the Fig. 2b, the second data packet comprises an Ethernet frame 214 having a source Ethernet field 210 and a destination Ethernet field 212, a source address field 216, a group address field 218, and a data field 220. The source Ethernet field 210 is where an Ethernet address of the second router is recorded, and the destination Ethernet field 212 is where an Ethernet of group is recorded.

Generally, the Ethernet addresses are composed of 48bits on NIC (Network Interface Card) of the router or terminal for network communication.

Then, the second router 116 transmits the second data packets of Fig. 2b to the link from which the first join signal is transmitted, and each of the first terminal 108 and the second terminal 110 receive the second data packets of Fig. 2b at once because the first terminal 108 and the second terminal 110 are connected with the same link.

Here, the second subscriber 104 does not request the service from the service provider, that is, an example of a subscriber who didn't join the group.

Namely, while one of the plural subscribers being connected with Ethernet transmits the join signal for requesting a service from the service provider, other subscribers that are connected to the Ethernet receive the service.

Also, in order to transmit the second data packet of FIG 2b to the third subscriber 106 that is connected through the Ethernet, the third router 118 transmits the second data packets to the link where the second join signal is transmitted from.

As a result of receiving the second data packet transmitted from the third router 112, the third subscriber 108 can take the service.

In order to define a service group, the host group multicast service that is embodied and performs according to the aforementioned description needs to be a preceding signal which should receive the join signals from the subscribers.

Also, in the host group multicast service, there is a disadvantage that the router must memorize the links that the join signals of the plural subscribers are transmitted through and manage the group that has transmitted the join signals.

Also, another disadvantage of the host group multicast service is that a service is offered to not only the one subscriber generating join signal but also the other subscriber that does not generate the join signal but is connected with the one subscriber through Ethernet.

In other words, the service provider 100 cannot perceive the subscribers included within the service group by the generated join signal.

Also, the disadvantage of the host group multicast service is that when there are many groups to be managed and the groups have small members, the cost for management of the links for transmitting data packets is too expensive.

A service method for overcoming the disadvantages of the host group multicast service as described above is the explicit multicast service.

In the explicit multicast service, Internet addresses of all subscribers are explicitly listed in a portion of the header of data packets that the service provider transmits.

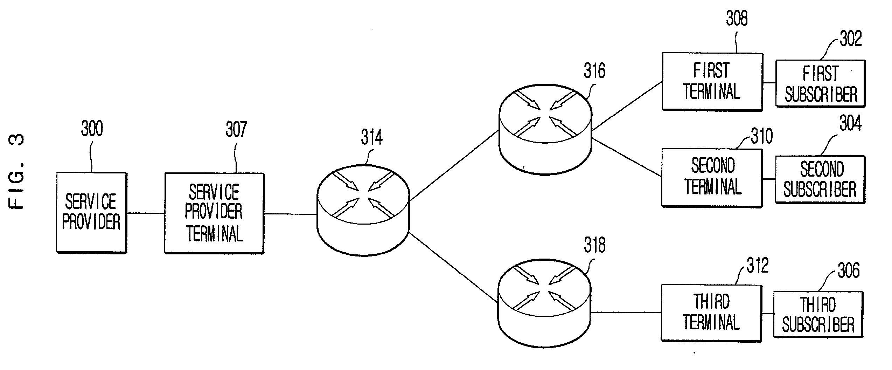

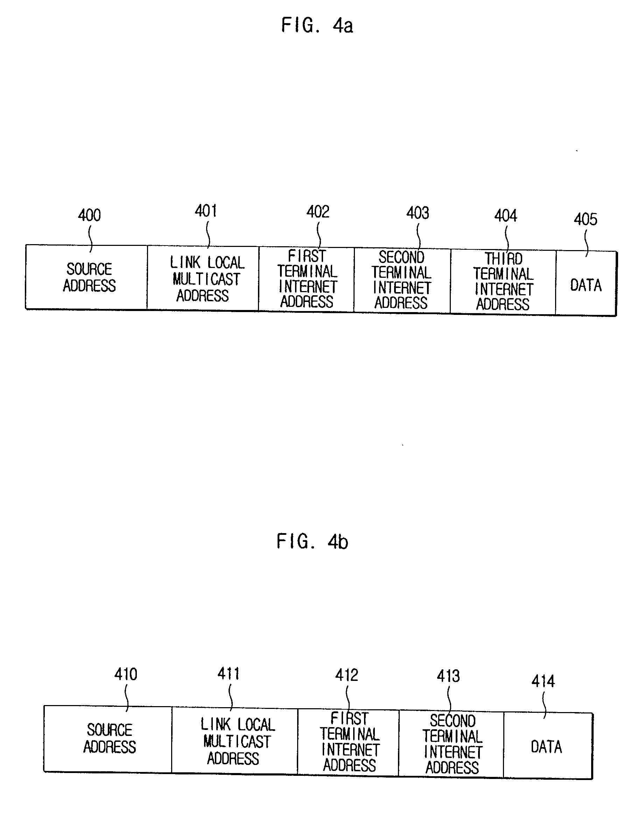

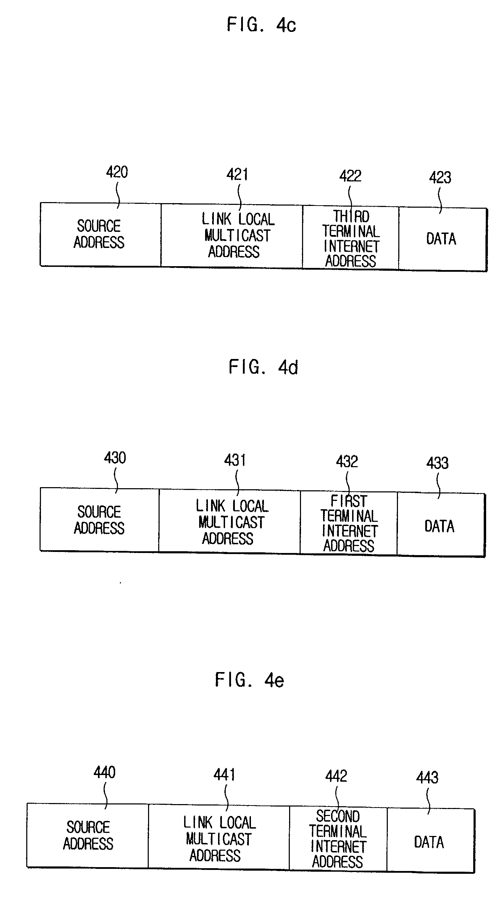

FIG 3 is a schematic view of an explicit multicast based on point-to-point links, and FIG 4 is schematic view of a data packet according to the explicit multicast.

Referring to FIG 3, the service provider 300 receives join signals from the first subscriber 302, the second subscriber 304, and the third subscriber 306 who request the service.

The service provider 300 detects the subscribers who will receive the service and transmits the first data packets for providing the service to the detected subscribers to the service provider terminal 307.

Here, the Internet addresses of the detected subscribers are explicitly listed in the destination address field of the first data packet.

That is, the first data packet that the service provider 300 transmits through the service provider terminal 307 comprises, as shown in FIG 4A, a source address field 400, a link local multicast address field 401, a first terminal Internet address field 402, a second terminal Internet address field 403, a third terminal Internet address field 404, and a data field 405.

Here, the Internet addresses of the first to the second terminals are included in the destination address field of the first data packet.

Also, the link local multicast address recorded in the link local multicast address field 401 is for distinguishing the explicit multicast from other types of multicast.

The link local multicast address is one of the multicast group addresses consisting of 222.0.0.0 to 239.255.255.255 for distinguishing multicast, and is assigned by address assigning facilities.

The first router 314 detects the number of paths of the first data packet by use of the destination field of the first data packet of FIG 4A, and in this case their are two paths, so the first router 314 reproduces the first data packet received from the service provider terminal 307 to generate the second data packet and the third data packet.

As shown in FIG 4B, a link local multicast address field 411 for distinguishing explicit multicast is included in a source address field 410, a first terminal Internet address field 412, a second terminal Internet address field 413 and a data field of the second data packet to be transmitted to the first subscriber 302 and the second subscriber 304.

Also, as shown in FIG 4C, a link local multicast address field 421 for distinguishing explicit multicast is included in a source address field 420, a third terminal Internet address field 422, and a data field 423 of the third data packet to be transmitted to the third terminal 308 of the third subscriber 306.

The second router 316 detects the number of paths of the third data packet by use of the destination field of the third data packet of FIG 4B and reproduces the third data packet to generate the fourth data packet of FIG 4D and the fifth data packet of FIG 4E.

Here, as shown in FIG 4D, the fifth data packet to be transmitted to the first terminal 308 of the first subscriber 302 comprises a source address field 430, a link local multicast address field 431, a first terminal Internet address field 432, and a data field 433.

Also, as shown in FIG 4E, the sixth data packet to be transmitted to the second terminal 310 of the second subscriber 304 comprises a source address field 440, a link local multicast address field 441, a first terminal Internet address field 442, and a data field 443.

The second router 316 transmits the fifth data packet to the first terminal 308 by the first terminal Internet address of the fifth data packet of FIG 4D and transmits the sixth data packet to the second terminal 310 by the second terminal Internet address of the sixth data packet of FIG 4E.

The third router 318 transmits the third data packet to the third terminal 312 by the third terminal Internet address of the third data packet of FIG 4C.

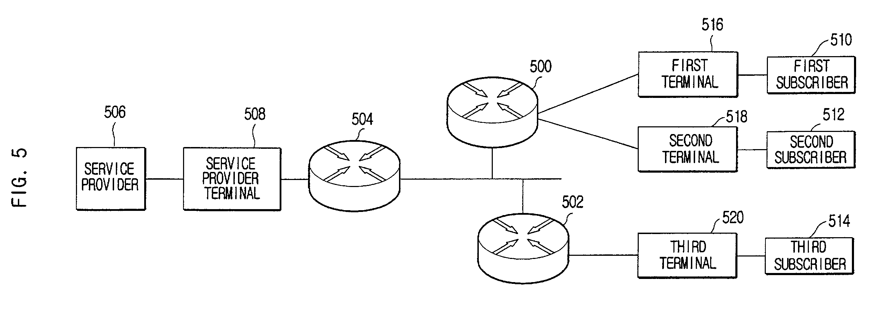

FIG 5 is a schematic block diagram for describing the explicit multicast service based on the Ethernet.

Referring to FIG 5, the explicit multicast service system is connected with the second router 500 and the third router 502 in the same link, and as a result each router can receive the data packets transmitted from the first router 504.

The service provider 506 receives service requests from the first subscriber 510, the second subscriber 512, and the third subscriber 514 through the service provider terminal 508 and then produces the first data packet of FIG 4A for the first router 504 in order to provide the service.

The first router 504 detects the number of the paths listed in the destination address field of the first data packet and reproduces the first data packet according to the number of the paths to generate the second data packet and the third data packet.

Here, the first router 504 transmits data packet to the Ethernet where the second router 500 and the third router 502 are connected to the same link, so the first router 504 produces the second data packet and the third data packet that an Ethernet frame has added to the header of the first data packet.

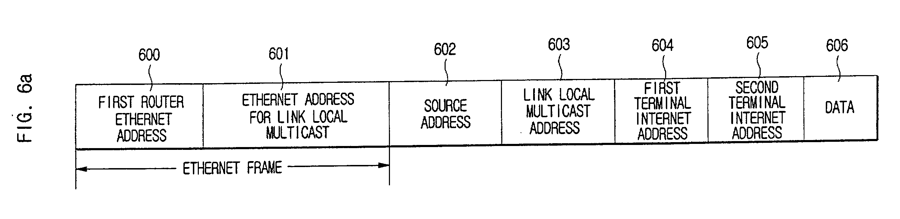

That is, as shown in FIG 6A, the second data packet comprises an Ethernet frame comprising a first router Ethernet address field 600 and an Ethernet address field for link local multicast 601, a source address field 602, a link local multicast address field 603, a first terminal Internet address field 604, a second terminal Internet address field 605, and a data field 606.

Here, the first terminal Internet address and the second terminal Internet address are recorded in the destination address field of the second data packet and the Ethernet frame is formed according to the address translation rule of the host group multicast data packet.

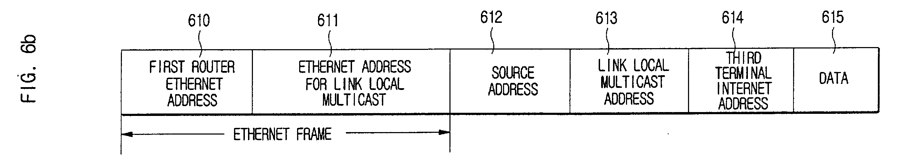

The third data packet, as shown in FIG 6B, comprises an Ethernet frame comprising a first router Ethernet address field 610 and an Ethernet address field 611 for link local multicast address, a source address field 612, a link local multicast address field 613, a third terminal Internet address field 614, and a data field 615.

Here, the Ethernet frame of the third data packet is formed according to the address translation rule of the host group multicast data packet.

By the first terminal Internet address and the second terminal Internet address recorded in the destination address field of the second data packet, the first router 504 becomes aware that it has to transmit the second data packet to the link that the second router 500 exists, and then transmits the second data packet to the link where the second router 500 is connected to.

At this time, the third router 502 is connected to the same link with the second router 500 and supports the explicit multicast, so the third router receives the second data packets from the first router 504 as like the second router 500.

The first and the second terminal Internet addresses that are recorded in the destination field of the received second data packet are not the destination that the third router controls, so the third router 502 transmits the received second data packet to the link that the second router exists.

While the second router 500 has already done a process for the second data packet received from the first router 504, since the second data packet is transmitted from the third router 502 again, the second router 500 has to do a process for the second data packet.

Also, since the first router 504 is connected to the link where the second router 500 exists, after receiving the second data packet from the third router 502, the first router 504 transmits the second data packet to the link, as a next path, where the second router exists again.

As aforementioned, there may be a routing error due to congestion caused by the first router 504, the second router 500, and the third router 502 that all perform repeatedly routing actions for the second data packet.

Generally, the links composed of Ethernet are much more than point-to-point links in a network such as Internet.

However, since the explicit multicast was designed based on the unicast, as aforementioned, when the Ethernet frame is applied according to the address translation rule of the host group multicast data packet in order to apply it to a broadcasting link such as Ethernet, there is a disadvantage such as routing error.

Accordingly, the present invention is for resolving the disadvantages of the prior art. An object of the present invention is to provide a method of an explicit multicast service in the Ethernet and device thereof, which use the Ethernet address of the next node in the path connected to the Ethernet link as a destination address of Ethernet frame.

### Summary of The Invention

According to one aspect of the present invention there is provided a method for providing explicit multicast service by a router connected to the Ethernet and apparatus thereof. The method and the apparatus perform as follows: receives the explicit multicast data packet to be transmitted to the Ethernet, detects a path of the explicit multicast data packet by use of the explicit multicast data packet, determines a next node on the path of the explicit multicast data packet, sets an Ethernet address of the next node as an Ethernet address of destination of the explicit multicast data packet, and transmits the explicit multicast data packet to the next node.

Also, the present invention provides a method for providing explicit multicast service by a router connected to the Ethernet and apparatus thereof, wherein the explicit multicast data packet comprises an Ethernet address of the router field, an Ethernet address of the next node field, a source INTERNET address field, a link local multicast address field, a destination INTERNET address field, and a data field.

### Brief Description Of The Drawings

FIG. 1 is a schematic view for illustrating a host group model multicast.
FIG 2 is a schematic view of multicast data according to the host group model multicast service.
FIG 3 is a schematic view of an explicit multicast based on point-to-point links.
FIG 4 is a schematic view of a data packet according to the explicit multicast.
FIG 5 is a schematic view of a system used for describing the explicit multicast service on Ethernet.
FIG 6 is schematic views of a data packet of explicit multicast service based on the Ethernet in the prior art.
FIG 7 is a schematic view of the explicit multicast data packet on Ethernet according to the first embodiment of the present invention.
FIG 8 is a flowchart for performing the explicit multicast service in Ethernet according to the first embodiment of the present invention.
FIG 9 is a schematic view of the explicit multicast data packet in Ethernet in accordance with the second embodiment of the present invention.
FIG 10 is a flowchart for transmitting the explicit multicast data packet in Ethernet in accordance with the second embodiment of the present invention.

The following list of reference numbers identify major parts shown in the drawings:
500 : second router
502 : third router
504 : first router
506 : service provider
508 : service provider terminal
510,512,514 : first to third subscribers respectively
516,518,520 : first to third subscriber terminals respectively

### Embodiments

A method and apparatus for explicit multicast service in Internet network will now be described with accompanying drawings.

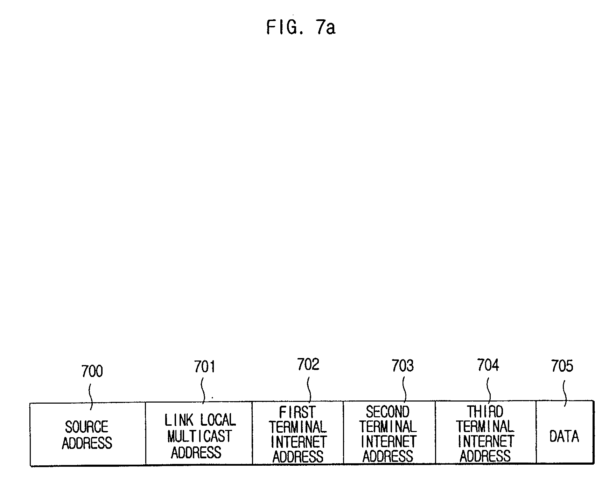

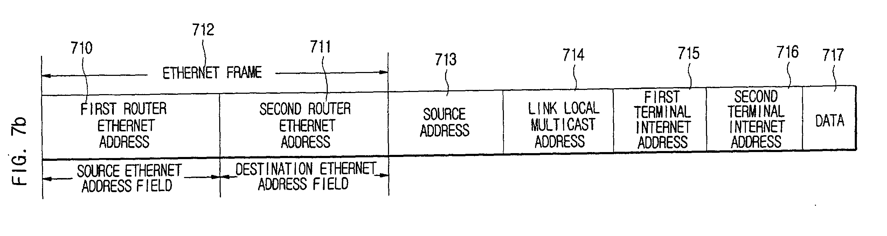

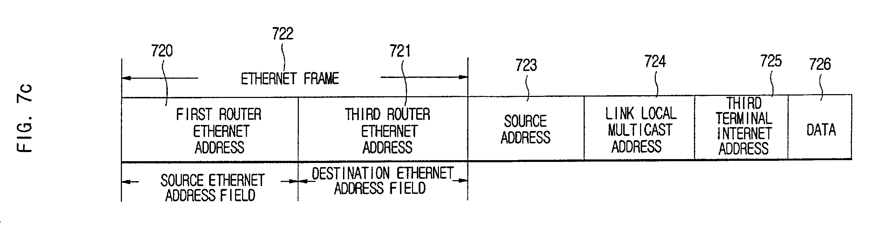

A schematic system used for describing the explicit multicast service on Ethernet is shown in FIG 5, and FIG 7 is a schematic view of the explicit multicast data packet in accordance with the present invention.

Referring to FIG 5, the explicit multicast service system in Ethernet in accordance with the present invention comprises a service provider 506, a service provider terminal 508, a first router 504, a second router 500, the first to third terminals 516, 518, 520 and the first to third subscribers 510, 512, 514.

Here, links between the first router 504, the second router 500 and the third router 502 are an Ethernet configuration such as a broadcast network that paths are connected to the same link.

The service provider terminal 508 transmits the first explicit multicast data packet corresponding to the service that the service wants to provide to the first router 504.

Here, the first explicit multicast data packet comprises, as shown in FIG 7A, a source address field 700, a link local multicast address field 701, a first terminal Internet address field 702, a second terminal Internet address field 703, a third terminal Internet address field 704, and a data field 705

The first router 504 detects the number of the paths by use of the Internet addresses recorded in the first to the third terminal Internet address fields 702, 703, 704 and reproduces the first explicit multicast data packet according to the number of the paths.

At this time, since the second router 500 and the third router 502 are connected to each other on the link of the same path to form an Ethernet configuration, the first router 504 reproduces the first data packet to generate the second and the third explicit multicast data packets that comprise an Ethernet frame in the header of the reproduced data packet.

Here, the second multicast data packet comprises, as shown in FIG 7B, an Ethernet frame 712 comprising a source Ethernet address field 710 and a destination address field 711, a source address field 713, a link local multicast address field 714, a first terminal Internet address field 715, a second terminal Internet address field 716, and a data field 717.

At this time, the link local multicast address field 714 is a predetermined address for distinguishing the explicit multicast among the multicast group addresses that are predetermined for distinguishing multicast.

When the link local multicast address is signaling addresses for a router comprising 224.0.0.0 to 239.255.255.255, the router that has received the data packet comprising link local multicast address can recognize that the received data packet is an explicit multicast data packet.

Also, the first router Ethernet address is recorded in the source Ethernet address field 710 of the Ethernet frame 712, and the second router Ethernet address is recorded in the destination Ethernet address field 711.

The first router 504 detects the second router 500, that is the next node, by the first terminal Internet address and the second terminal Internet address in the destination address field of the first explicit multicast data packet and then records the Ethernet address of the second router 500 in the destination address field 711 of the Ethernet frame 712.

On the other hand, the third explicit multicast data packet comprises, as shown in FIG 7c, an Ethernet frame comprising a source Ethernet address field 720 and a destination Ethernet address field 721, a source address field 723, a link local multicast address field 724, a third terminal Internet address field 725, and a data field 726.

Here, the first router Ethernet address is recorded in the source Ethernet address field 720 of the Ethernet frame 722 of the third explicit multicast data packet and the third router Ethernet address, that is, the next node on the path of the third explicit multicast data packet is recorded in the destination field 721.

According to the number of paths, the first router 504 detects the third router 502, the next node of the third explicit multicast data packet, by the third terminal Internet address, and detects the Ethernet address of the third router 502

Subsequently, the first router 504 transmits the second explicit multicast data packet to the second router 500 by the second router Ethernet address recorded in the destination Ethernet address field 711 of the second explicit multicast data packet as shown in FIG 7B.

By the first terminal Internet address and the second terminal Internet address that are recorded in the first terminal Internet address 715 and the second terminal Internet address field 716, namely, the destination field of the second explicit multicast data packet, the second router 500 reproduces the second explicit multicast data packet and then transmits the data packet to the first terminal 516 and the second terminal 518.

Also, by the third router Ethernet address recorded in the destination Ethernet address field 721 of the third explicit multicast data packet, as shown in FIG 7C, the first router 504 transmits the third explicit multicast data packet to the third router 502.

Via the third terminal Internet address recorded in the third terminal Internet address field 725 that is a destination address field of the third explicit multicast data packet, the third router 502 transmits the third explicit multicast data packet.

The explicit multicast service method in Ethernet in accordance with the aforementioned first embodiment will be described with reference to the accompanying drawings.

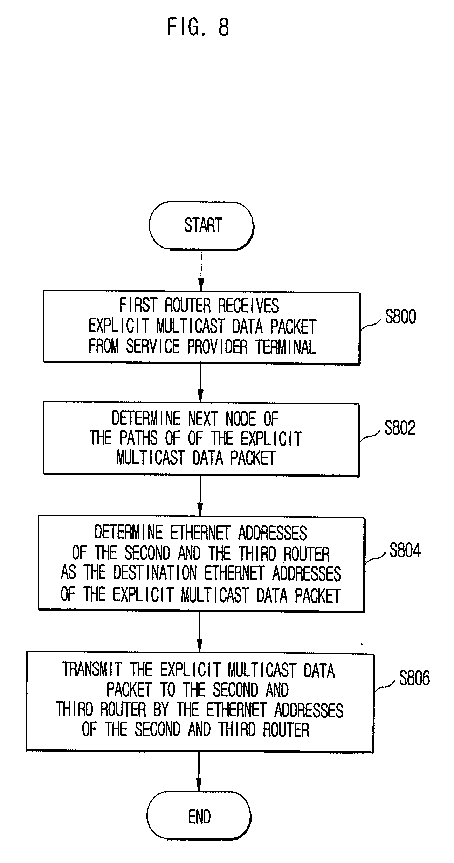

FIG 8 is a flowchart for performing the explicit multicast service in Ethernet according to the first embodiment of the present invention.

The second router 500 and the third router 502 are connected to the same link to form Ethernet configuration, and the first router 504 that transmits the data packet to the link that the second router 500 and the third router 502 are connected to receives explicit multicast data packet from the service provider terminal 508(S800).

Subsequently, the first router 504 determines the next node of the paths of the explicit multicast data packet by use of the destination Internet address field of the received explicit multicast data packet(S802). Here, the next node of the paths of the explicit multicast data packet is the second router 500 and the third router 502.

The first router 504 determines that the Ethernet addresses of the second router 500 and the third router 502 as the next node of the paths of the explicit multicast data packet are the destination Ethernet addresses of the explicit multicast data packets(S804).

Subsequently, the first router 504 transmits the explicit multicast data packet having the Ethernet address of the second or the third router, which is determined as a destination Ethernet address of the explicit multicast data packet, as a destination Ethernet address to the second router 500 or the third router 502 respectively(S806).

The second embodiment of the present invention is described with the accompanying drawings.

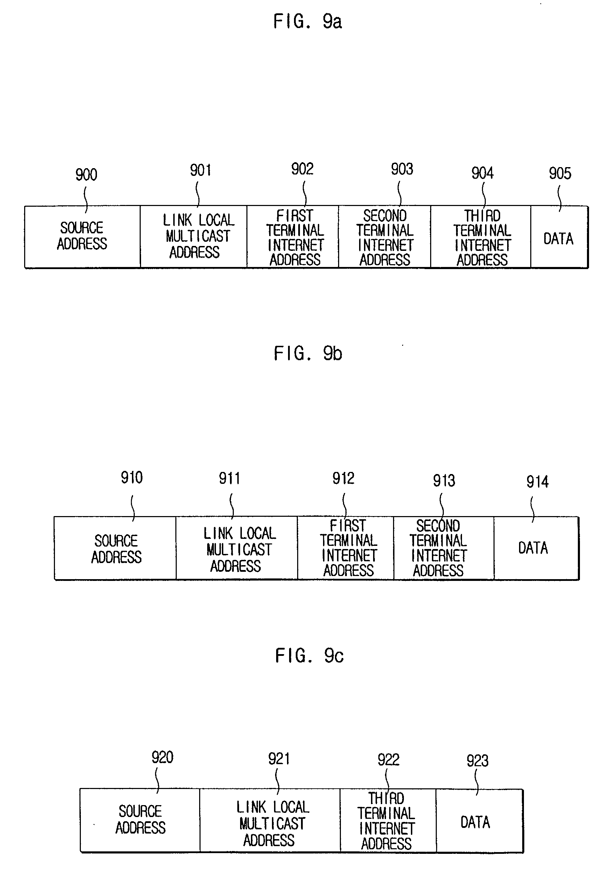

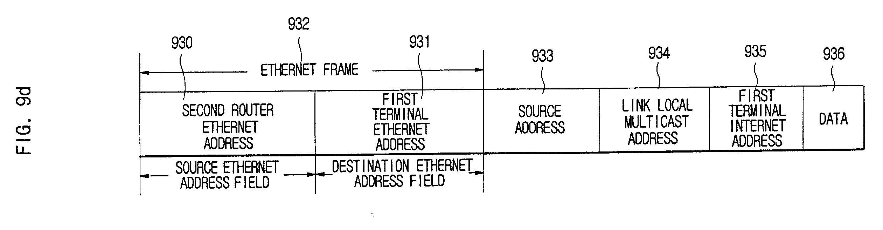

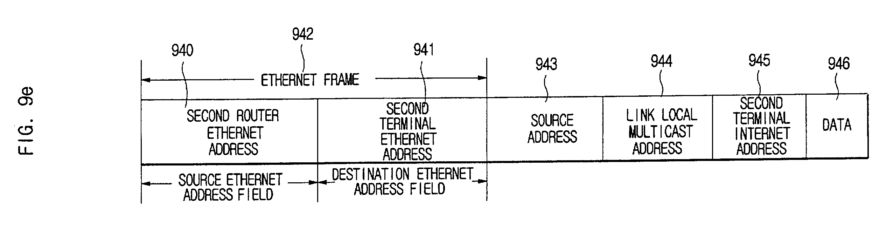

The explicit multicast service system in accordance with the second embodiment of the present invention is the same as the system in FIG 1, and FIG 9 is a schematic view of the explicit multicast data packet in Ethernet in accordance with the second embodiment of the present invention.

Referring to FIG 1, the explicit multicast service system in Ethernet in accordance with the second embodiment of the present invention comprises a service provider 100, a service provider terminal 113, the first to third routers 114, 116, 118, the first to third subscriber terminals 108, 110, 112 and the first to third subscribers 102, 104, 106.

Here, the first terminal 108 and the second terminal 110 are an Ethernet configuration such as broadcasting network that paths are connected to the same link.

In order to provide the service through the service provider terminal 113, the service provider 100 transmits the first explicit multicast data packet as shown in FIG 9A to the first router 114.

Here, the first explicit multicast data packet comprises, as shown in FIG 9A, a source address field 900, a link local multicast address field 901, a first terminal Internet address field 902, a second terminal Internet address field 903, a third terminal Internet address field 904, and a data field 905.

The first router 114 detects the number of paths by use of the Internet addresses of the first to third terminals recorded in the destination address field of the first explicit multicast data packet and reproduces the first explicit multicast data packet according to the number of paths to generate the second and the explicit multicast data packet as shown in FIG 9B and FIG 9C.

The second multicast data packet comprises, as shown in FIG 9B, a source address field 910, a link local multicast address field 911, a first terminal Internet address field 912, a second terminal Internet address field 913, and a data field 914.

Also, the third explicit multicast data packet comprises, as shown in FIG 9C, a source address field 920, a link local multicast address field 921, a third terminal Internet address field 922, and a data field 923.

The first router 114 transmits the generated second explicit multicast data packet to the second router 116 and the third explicit multicast data packet to the third router 118.

The second router 116 detects the number of paths by use of the Internet addresses of the first and the second terminals recorded in the destination address field of the second explicit multicast data packet and reproduces the second explicit multicast data packet according to the number of the detected paths.

Here, since the first terminal 108 and the second terminal 110 are connected to the same link to form Ethernet configuration, the second router 116 generates the fourth and the fifth explicit multicast data packets having an Ethernet frame that is added to the second explicit multicast data packet as shown in FIG 9D and FIG 9E.

As shown in FIG 9D, in the fourth explicit multicast data packet, the second router Ethernet address is recorded in the source Ethernet address field 903 of the Ethernet frame 932, and the first terminal Ethernet address is recorded in the destination Ethernet address field 930.

Also, as shown in FIG 9E, in the fifth explicit multicast data packet, the second router Ethernet address is recorded in the source Ethernet address field 940 of the Ethernet frame 942, and the second terminal Ethernet address is recorded in the destination Ethernet address field 940.

The second router 116 transmits the fourth explicit multicast data packet to the first terminal 108 by the first terminal Ethernet address recorded in the destination Ethernet address field 931 of the fourth explicit multicast data packet as shown in FIG 9D.

Also, the second router 116 transmits the fifth explicit multicast data packet to the second terminal 110 by the second terminal Ethernet address recorded in the destination Ethernet address field 941 of the fifth explicit multicast data packet as shown in FIG 9E.

The method for transmitting the explicit multicast data packet in Ethernet of the apparatus for explicit multicast data packet service in accordance with the present invention is described by referring to the accompanying drawings.

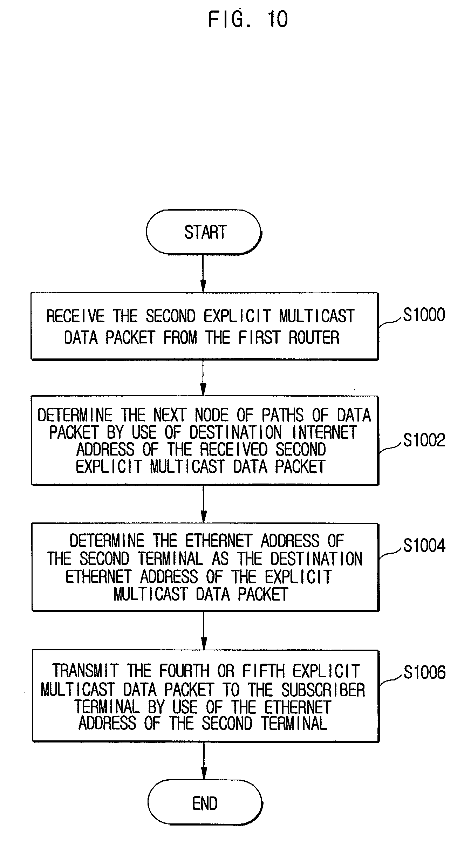

FIG 10 is a flowchart for transmitting the explicit multicast data packet in Ethernet in accordance with the second embodiment of the present invention.

The second router 116 connected to the Ethernet that the first terminal 108 and the second terminal 110 are connected to the same link receives the second explicit multicast data packet from the first router 114(S1000).

Here, the second explicit multicast data packet is generated by the first router 114 that reproduces the first explicit multicast data packet received from the service provider terminal 113.

Subsequently, the second router 116 determines the next nodes in the paths of data packets by use of the destination Internet address of the received second explicit multicast data packet. Here, the next nodes in the paths of data packet are the first terminal 108 and the second terminal 110.

The second router 116 decides the Ethernet addresses of the first terminal 108 and the second terminal 110 that are the next nodes in the paths of data packet as a destination Ethernet address of the first terminal 108 or the second terminal 110 (S1004).

Subsequently, the second router 116 transmits the fourth or the fifth explicit multicast data packet to the first terminal 108 or the second terminal 110 by the destination Ethernet address of the fourth or the fifth explicit multicast data packet(S1006).

Here, the fourth or the fifth explicit multicast data packet is generated by the second router 116 that reproduces the second explicit multicast data packet.

### Industrial Applicability

The method for explicit multicast service system in Ethernet and apparatus thereof in accordance with the present invention establishes the Ethernet address of the next node in the paths of the explicit multicast data packet as a destination Ethernet address of the packet.

Accordingly, the present invention can transmit the explicit multicast data packet to the destination without the routing errors that cause the congestion of service in the explicit multicast service based on the point-to-point link.

Accordingly, since the present invention can be applied to the multicast service in Ethernet, join message management and group management are no longer necessary. As a result, a shortage in the storage capacity of the router can be prevented.

Also, since the explicit multicast data packet can be transmitted to the destination without the routing errors according to the present invention, the reliability for users of the explicit multicast service can be enhanced.

While the present invention has been described with reference to certain preferred embodiments, those skilled in the art will nevertheless appreciate that various changes in form and detail may be made without departing from the present invention as defined in the appended claims.

## Claims

1. A method for providing explicit multicast service by a router coupled to Ethernet, said method comprising the steps of:
receiving an explicit multicast data packet to be transmitted to the Ethernet;
detecting a path of the explicit multicast data packet by use of the explicit multicast data packet;
determining a next node on the path of the explicit multicast data packet;
setting an Ethernet address of the next node as an Ethernet address of destination of the explicit multicast data packet; and
transmitting the explicit multicast data packet to the next node.

2. A method as claimed in claim 1 wherein the explicit multicast data packet to be transmitted to the next node comprises an Ethernet address of the router field, an Ethernet address of the next node field, an Internet source address field, a link local multicast address field, an Internet destination address field, and a data field.

3. A method as claimed in claim 1 or claim 2 wherein the next node is selected from a group consisting of a router coupled to the Ethernet and a service subscriber's terminal.

4. A device for explicit multicast service by a router coupled to Ethernet, comprising:
means for receiving an explicit multicast data packet to be transmitted to the Ethernet;
means for detecting a path of the explicit multicast data packet by use of the explicit multicast data packet;
means for determining a next node on the path of the explicit multicast data packet;
means for setting an Ethernet address of the next node as an Ethernet address of destination of the explicit multicast data packet; and
means for transmitting the explicit multicast data packet to the next node.

5. A device as claimed in claim 4 wherein the explicit multicast data packet to be transmitted to the next node comprises an Ethernet address of the router field, an Ethernet address of the next node field, an Internet source address field, a link local multicast address field, an Internet destination address field, and a data field.

6. A device as claimed in claim 4 or claim 5 wherein the next node is selected from a group consisting of a router coupled in the Ethernet and a service subscriber's terminal.

7. A device coupled to Ethernet for providing an explicit multicast service, said device comprising:
a storage device for storing a program thereon; and
a processor coupled to said storage device for executing the program,
wherein by the program, said processor performs the steps of:
receiving an explicit multicast data packet to be transmitted to the Ethernet;
detecting a path of the explicit multicast data packet by use of the explicit multicast data packet;
determining a next node on the path of the explicit multicast data packet;
setting an Ethernet address of the next node as an Ethernet address of destination of the explicit multicast data packet; and
transmitting the explicit multicast data packet to the next node.
